# EUROPÄISCHE PATENTSCHRIFT

(11) **EP 0 657 511 B1**
(45) Veröffentlichungstag und Bekanntmachung des Hinweises auf die Patenterteilung: **26.08.1998**
(21) Anmeldenummer: 94114905.6
(22) Anmeldetag: 22.09.1994
(51) Int. Cl.: C09C 3/04, C04B 14/30, C04B 14/02

(54) **Pigmentgranulat zum Einfärben von Baustoffen**
Pigment granule for coloring building materials
Granulé de pigment pour la coloration de matériaux de construction

(30) Priorität: 11.12.1993 DE 4342331
(43) Veröffentlichungstag der Anmeldung: 14.06.1995
(73) Patentinhaber: KRÜGER GmbH & CO. KG, D-51469 Bergisch-Gladbach (DE)
(72) Erfinder: Schweren, Rolf, Dipl.-Ing., D-50171 Kerpen (DE); Meyer, Franz Josef, Dipl.-Ing., D-53757 Sankt-Augustin (DE)
(74) Vertreter: Eggert, Hans-Gunther, Dr.

(56) Entgegenhaltungen:
- EP-A- 0 507 046
- BE-A- 728 102
- FR-A- 2 359 884
- DATABASE WPI Week 8241, Derwent Publications Ltd., London, GB; AN 82-87432E & SU-A-887 604 (ENG. CARBON RES. INST.) 7. Dezember 1981
- PATENT ABSTRACTS OF JAPAN vol. 10, no. 235 (C-366) 14. August 1986 & JP-A-61 069 878 (KANPE KATEI) 10. April 1986
- DATABASE WPI Week 9303, Derwent Publications Ltd., London, GB; AN 93-024052 & JP-A-4 352 709 (TSUMURA & CO.) 7. Dezember 1992
- DATABASE WPI Week 7903, Derwent Publications Ltd., London, GB; AN 79-04897B & JP-A-53 139 638 (TOYO SODA) 6. Dezember 1978
- DATABASE WPI Week 8137, Derwent Publications Ltd., London, GB; AN 81-66743D & JP-A-56 092 183 (SHOWA DENKO) 25. Juli 1981

## Beschreibung

Die Erfindung betrifft Pigmentgranulate, insbesondere Eisenoxidgranulate und deren Herstellung aus wäßrigen Pigmentsuspensionen. Das Eisenoxidgranulat dient vorwiegend zum Einfärben von Beton.

Zu den Eisenoxidpigmenten gehört eine große Gruppe von natürlichen oder künstlichen gelben, roten, braunen, grauen oder schwarzen anorganischen Pigmenten, die Eisenoxide als färbenden Hauptbestandteil enthalten. Heute werden die hochwertigen stabilisierten gefällten Eisenoxidpigmente bevorzugt.

Zum Einfärben von Baustoffen, insbesondere Betonwaren, werden vor allem wäßrige, lösungsmittelfreie Eisenoxidpigmentsuspensionen oder -pasten verwendet, die durch Tenside stabilisiert sind, um lagerfähig zu bleiben, d.h. eine Entmischung zu verhindern. Die reinen Pigmente können nicht eingesetzt werden, weil sie in den Silos backen, nicht mehr frei fließend sind und schlecht dosiert werden können.

Aus der DE-PS 36 19 363 ist bekannt, z.B. durch Sprühtrocknung Pigmentgranulate herzustellen, die Bindemittel der verschiedensten chemischen Zusammensetzungen enthalten, denen gemeinsam ist, daß sie die Dispergierung der Pigmente im Beton fördern. Überwiegend sind diese Bindemittel auch als Betonzusatzmittel bekannt wie verschiedene Polymeren, Naphthalinformaldehydkondensate und Ligninsulfonate. Letztere werden besonders bevorzugt.

Als Nachteil der bekannten Eisenoxidgranulate hat sich herausgestellt, daß sie in den üblichen Dosiereinrichtungen, z.B. in den Zuführungsschläuchen, zu größeren Stücken zusammenkleben, die sich dann auch beim Betonmischen nicht mehr ausreichend verteilen. Diese Erscheinung wurde auch auf eine zu hohe Restfeuchte von etwa 4 % zurückgeführt.

Der Erfindung lag daher die Aufgabe zugrunde, ein Bindemittel für Pigmentgranulate, insbesondere Eisenoxidgranulate zum Einfärben von Baustoffen zu finden, die den üblichen Anforderungen genügen, d.h. frei fließend und praktisch staubfrei sind und sich pneumatisch fördern lassen, deren Festigkeit aber so hoch ist, daß sie in den üblichen Dosiereinrichtungen nicht zerquetscht werden, trotzdem aber in den Baustoffmischungen unter Einwirkung von Wasser in die Pigmentteilchen zerfallen, aus denen die Agglomerate hergestellt wurden. Das Pigmentgranulat soll also letztlich eine ebenso feine Verteilung der Pigmente in der Mörtelmischung gewährleisten, wie sie mit dem Zusatz von wäßrigen Pigmentsuspensionen möglich ist.

Erfindungsgemäß wird diese Aufgabe dadurch gelöst, daß als Bindemittel für die anorganischen Pigmente, insbesondere die Eisenoxide, ein Disaccharid verwendet wird. Geeignete Disaccharide sind insbesondere Cellobiose, Maltose, Lactose, Gentobiose, Melibiose, Tetrahalose oder Turanose. Diese Zucker kristallisieren selbst oder als Hydrat und sind in Wasser gut löslich. Als besonders geeignet hat sich die Lactose erwiesen, weil sie die Herstellung besonders harter aber trotzdem leicht dispergierbarer Pigmentgranulate ermöglicht. Das mag daran liegen, daß die bei der Sprühtrocknung der wäßrigen Eisenoxiddispersion entstehenden sehr feinen Lactosekristalle die Pigmentteilchen besonders gut zusammenhalten. Weil die Lactose relativ gut wasserlöslich ist, zerfallen die Granulate auch leicht beim Anmischen des Betonmörtels. Ähnliches gilt für die anderen genannten Disaccharide, die aber nicht alle Handelsprodukte sind und ausreichend preiswert zur Verfügung stehen.

Die Mengen der Disaccharide, die letztlich in die Mörtelmischung gelangen, sind mit weniger als 0,002 % so gering, daß sie als inerte Zusatzstoffe des Betons angesehen werden können. Irgendwelche nachteiligen Wirkungen wurden zumindest nicht festgestellt. Auch das bekannteste Disaccharid Saccharose (Rohrzucker) ist für die Zwecke der Erfindung, d.h. harter gut dispergierbarer Eisenoxidpigmente, durchaus brauchbar, sofern beim Einfärben von Beton die erstarrungsverzögernde Wirkung der eingebrachten geringen Mengen des Zuckers hingenommen werden kann oder erwünscht ist.

Die erfindungsgemäßen Pigmentgranulate enthalten das Disaccharid in einer Menge von 0,15 bis 5,0, insbesondere 0,5 bis 4,2 Gew.%, bezogen auf das Eisenoxidpigment. Bei der an sich bekannten Herstellung durch Sprühtrocknung werden leicht Restfeuchten unter 2,5 %, insbesondere uni etwa 1 Gew.%, erreicht. Weil die Pigmentsuspensionen, aus denen Pigmentgranulate hergestellt werden, in der Regel bereits Tenside enthalten, können auch die erfindungsgemäßen Eisenoxidpigmente zusätzlich die üblichen, meist anionenaktiven Tenside der eingesetzten wäßrigen Suspensionen enthalten.

Zur Herstellung des Pigmentgranulats, z.B. Eisenoxidgranulat, wird der wäßrigen Eisenoxidsuspension das Disaccharid in der gewünschten Menge zugefügt. Die wäßrige Eisenoxidsuspension wird dann mittels eines Siebes, das eine Maschenweite von 100 bis 500 µm, vorzugsweise 180 µm aufweist, homogenisiert und mit einer Pumpe zu den Druckdüsen eines Trockenturmes transportiert. Der Druck in der Einspeisungsleitung liegt im allgemeinen zwischen 1 und 50 bar, vorzugsweise in einem Bereich von 14 bis 19 bar. Die wäßrige Suspension wird aus wenigstens einer im Trockenturm nach oben gerichteten Druckdüse versprüht (Springbrunnenkonfiguration) und im Gegenstrom dazu ein trocknendes inertes gasförmiges Medium, das über einen Brenner erhitzt wurde, in den Trockenturm eingeleitet. Die Eintrittstemperatur des gasförmigen Mediums, vorzugsweise Luft, beträgt 180 bis 350 °C, vorzugsweise 200 bis 260 °C.

Das entstehende Granulat wird im Trockenturm über eine Sammeleinrichtung und mitgerissenes Granulat in wenigstens einem Abscheider aufgefangen. Die Abscheider können z.B. Zyklone, Naß-, Trocken- oder Elektrofilter sein. Das erfindungsgemäße Eisenoxidgranulat hat Teilchengrößen von 45 bis 550 µm, vorzugsweise eine durchschnittliche Teilchengröße von 160 bis 220 µm gefunden.

Die Verwendung der Disaccharide, insbesondere Lactose, gibt dem Eisenoxidgranulat eine bessere Festigkeit und macht es stabiler gegen mechanische Beanspruchung. Das Eisenoxidgranulat kann zum Einfärben von Beton, Kunststoffen, Lacken oder ähnlichem Verwendung finden.

Die gute Löslichkeit des Bindemittels der erfindungsgemäßen Pigmentgranulate wirkt sich z.B. in Beton vorteilhaft aus und beugt Farbfehlern vor, die durch sich bildende Farbnester entstehen können.

### Beispiel:

Es wurde ein Sprühtrockenturm von 2,95 m Höhe und einem Durchmesser von 2,5 m mit einem 60 ° Konus und einer Druckdüse verwendet, die aufwärts sprüht und in der sogenannten Springbrunnenkonfiguration angebracht ist. Die Trocknungsluft wurde direkt durch Verbrennen von Propan mit einem Brenner erhitzt und zu einem Luftverteiler geleitet, der im Zentrum des Trockenturms angebracht ist. Die Abluft wird über einen Zyklon in einen Schlauchfilter und durch eine Naßwäsche geleitet, bevor sie ins Freie gelangt. Das entstandene Granulat wird unter dem Turm bzw. dem Zyklon durch rotierende Schleusen aufgefangen.

Eine wäßrige Eisenoxidsuspension mit etwa 57 bis 58 % Trockensubstanzgehalt wird durch ein 180 µm Sieb homogenisiert und über die Materialzufuhr zur Druckdüse gepumpt. Die Eingangstemperatur der Trocknungsluft beträgt 242 bis 250 °C und die Ausgangstemperatur 123 bis 128 °C. Der Zerstäubungsdruck beträgt 16 bis 19 bar. Der wäßrigen Eisenoxidsuspension von 660 kg sind 13,5 kg (2 %) Lactosepulver beigemischt. Das entstehende Granulat ist staubfrei und rieselfähig und hat die Form von hohlen, kugelförmigen Partikeln, mit einer mittleren Teilpartikelgröße von 200 um und einer Restfeuchte von 1 %.

## Patentansprüche

1. Pigmentgranulat zum Einfärben von Baustoffen mit einer Teilchengröße von 45 bis 550 µm, enthaltend anorganische Pigmente und 0,15 bis 5,0 Gew.-%, bezogen auf das Pigment, eines Disaccharids als Bindemittel.

2. Pigmentgranulat nach Anspruch 1, dadurch gekennzeichnet, daß das Disaccharid Cellobiose, Maltose, Lactose, Gentobiose, Melibiose, Tetrahalose oder Turanose ist.

3. Pigmentgranulat nach Anspruch 1 oder 2, dadurch gekennzeichnet, daß das Disaccharid Lactose ist.

4. Pigmentgranulat nach einem der Ansprüche 1 bis 3, dadurch gekennzeichnet, daß das anorganische Pigment ein Eisenoxidpigment ist.

5. Pigmentgranulat nach Anspruch 4, dadurch gekennzeichnet, daß das Eisenoxidpigment ein gefälltes Eisenoxidpigment ist.

6. Pigmentgranulat nach einem der Ansprüche 1 bis 5, dadurch gekennzeichnet, daß es zusätzlich ein Tensid enthält.

7. Pigmentgranulat nach einem der Ansprüche 1 bis 6, dadurch gekennzeichnet, daß es das Disaccharid in einer Menge von 0,5 bis 4,2 Gew.-% enthält, bezogen auf das Pigment.

8. Pigmentgranulat nach einem der Ansprüche 1 bis 7, gekennzeichnet durch eine Restfeuchte von 0,5 bis 2,5 Gew.%, vorzugsweise 1 bis 2 Gew.%.

9. Pigmentgranulat nach einem der Ansprüche 1 bis 8, dadurch gekennzeichnet, daß es ein Perlgranulat ist.

10. Perlgranulat nach Anspruch 9, dadurch gekennzeichnet, daß es eine durchschnittliche Teilchengröße von 160 bis 220 µm hat.

11. Verfahren zur Herstellung von Pigmentgranulaten nach einem der Ansprüche 1 bis 10, wobei
man eine homogenisierte wäßrige Suspension von anorganischen Pigmenten herstellt, die in gelöster Form 0,15 bis 5,0 Gew.-%, bezogen auf das Pigment, eines Disaccharids als Bindemittel enthält;
man die so hergestellte Suspension im Gegenstrom zu einem trocknenden gasförmigen Medium versprüht; und
man das entstehende Granulat in Sammeleinrichtungen auffängt.

12. Verfahren nach Anspruch 11, wobei die Eingangstemperatur des gasförmigen Mediums 180 bis 350 °C, vorzugsweise 200 bis 260 °C beträgt.

13. Verfahren nach Anspruch 11 oder 12, wobei die Ablufttemperatur 120 bis 130 °C beträgt.

14. Verfahren nach einem der Ansprüche 11 bis 13, wobei der Einspeisungsdruck 1 bis 50 bar, vorzugsweise 14 bis 19 bar, beträgt.

15. Verfahren nach einem der Ansprüche 11 bis 14, wobei man bei der Herstellung der Pigmentsuspension 0,5 bis 2,5 Gew.-% Disaccharid verwendet.

16. Verfahren nach einem der Ansprüche 11 bis 15, wobei die Pigmentsuspension wenigstens ein Eisenoxidpigment enthält.

17. Verfahren nach Anspruch 16, wobei das Eisenoxidpigment ein gefälltes Eisenoxidpigment ist.

18. Verfahren nach einem der Ansprüche 11 bis 16, wobei das Disaccharid Cellobiose, Maltose, Lactose, Gentobiose, Melibiose, Tetrahalose oder Turanose ist.

19. Verfahren nach Anspruch 18, wobei das Disaccharid Lactose ist.

20. Verfahren nach einem der Ansprüche 11 bis 19, wobei bei der Herstellung der Suspension zusätzlich ein Tensid verwendet wird.

21. Verfahren nach einem der Ansprüche 11 bis 20, wobei das Pigmentgranulat eine Restfeuchte von 0,5 bis 2,5 Gew.-%, vorzugsweise von 1 bis 2 Gew.-%, aufweist.

22. Verwendung eines Pigmentgranulats nach einem der Ansprüche 1 bis 10 zum Einfärben von Baustoffen.

## Claims

1. Pigment granules for dyeing building materials having a particle size of from 45 µm to 550 µm, comprising inorganic pigments and an amount of 0.15 to 5.0 percent by weight, based on the weight of said pigment, of a disaccharide as a binder.

2. Pigment granules according to claim 1, characterized in that the disaccharide is cellobiose, maltose, lactose, gentiobiose, melibiose, tetrahalose or turanose.

3. Pigment granules according to claims 1 or 2, characterized in that the disaccharide is lactose.

4. Pigment granules according to one of the claims 1 to 3, characterized in that the inorganic pigment is an iron oxide pigment.

5. Pigment granules according to claim 4, characterized in that the iron oxide pigment is a precipitated iron oxide pigment.

6. Pigment granules according to one of the claims 1 to 5, characterized in that it additionally comprises a surfactant.

7. Pigment granules according to one of the claims 1 to 6, characterized in that the disaccharide is present in an amount of from 0.5 to 4.2 percent by weight, based on the weight of said pigment.

8. Pigment granules according to one of the claims 1 to 7, characterized in a residual moisture content of from 0.5 to 2.5 percent by weight, preferably from 1 to 2 percent by weight.

9. Pigment granules according to one of the claims 1 to 8, characterized in that the pigment granules are pearl granules.

10. Pearl granules according to claim 9, characterized in having a medium particle size of from 160 to 220 µm.

11. Process for producing pigment granules according to one of the claims 1 to 10, wherein
a homogenized aqueous suspension of inorganic pigments is produced comprising in dissolved form 0.15 to 5.0 percent by weight, based on the weight of said pigment, of a disaccharide as a binder;
the so prepared suspension is sprayed under pressure opposite the flow of a gaseous drying medium; and
the so formed granules are collected into a collecting device.

12. Process according to claim 11, wherein the input temperature of the gaseous medium is from 180 to 350°C, preferably from 200 to 260 °C.

13. Process according to claim 11 or 12, wherein the temperature of the exhaust air is from 120 to 130 °C.

14. Process according to one of the claims 11 to 13, wherein the spray pressure is from 1 bar to 50 bar, preferably from 14 bar to 19 bar.

15. Process according to one of the claims 11 to 14, wherein in the preparation of the pigment suspension 0.5 to 2.5 percent by weight of disaccharide is used.

16. Process according to one of the claims 11 to 15, wherein the pigment suspension contains at least one iron oxide pigment.

17. Process according to claim 16, wherein the iron oxide pigment is a precipitated iron oxide pigment.

18. Process according to one of the claims 11 to 16, wherein the disaccharide is cellobiose, maltose, lactose, gentiobiose, melibiose, tetrahalose or turanose.

19. Process according to claim 18, wherein the disaccharide is lactose.

20. Process according to one of the claims 11 to 19, wherein in the preparation of the suspension additionally a surfactant is used.

21. Process according to one of the claims 11 to 20, wherein the pigment granules have a residual moisture content of from 0.5 to 2.5 percent by weight, preferably from 1 to 2 percent by weight.

22. Use of pigment granules according to one of the claims 1 to 10 for dyeing building materials.

## Revendications

1. Granulé pigmentaire destiné à la coloration de matériaux de construction, ayant un diamètre de particules de 45 à 550 µm, contenant des pigments inorganiques et 0,15 à 5,0 % en poids, par rapport au pigment, d'un disaccharide comme liant.

2. Granulé pigmentaire suivant la revendication 1, caractérisé en ce que le disaccharide est le cellobiose, le maltose, le lactose, le gentobiose, le mélibiose, le tétrahalose ou le turanose.

3. Granulé pigmentaire suivant la revendication 1 ou 2, caractérisé en ce que le disaccharide est le lactose.

4. Granulé pigmentaire suivant l'une des revendications 1 à 3, caractérisé en ce que le pigment inorganique est un pigment d'oxyde de fer.

5. Granulé pigmentaire suivant la revendication 4, caractérisé en ce que le pigment d'oxyde de fer est un pigment d'oxyde de fer précipité.

6. Granulé pigmentaire suivant l'une des revendications 1 à 5, caractérisé en ce qu'il contient en outre un agent tensio-actif.

7. Granulé pigmentaire suivant l'une des revendications 1 à 6, caractérisé en ce qu'il contient le disaccharide en une quantité de 0,5 à 4,2 % en poids par rapport au pigment.

8. Granulé pigmentaire suivant l'une des revendications 1 à 7, caractérisé par une humidité résiduelle de 0,5 à 2,5 % en poids, de préférence de 1 à 2 % en poids.

9. Granulé pigmentaire suivant l'une des revendications 1 à 8, caractérisé en ce qu'il est un granulé en perles.

10. Granulé en perles suivant la revendication 9, caractérisé en ce qu'il a un diamètre moyen de particules de 160 à 220 µm.

11. Procédé de production de granulés pigmentaires suivant l'une des revendications 1 à 10, dans lequel
on prépare une suspension aqueuse homogénéisée de pigments inorganiques, qui contient sous la forme dissoute 0,15 à 5,0 % en poids, par rapport au pigment, d'un disaccharide comme liant ;
on pulvérise la suspension ainsi préparée à contre-courant par rapport à un fluide gazeux de séchage ; et
on recueille le granulé produit dans des dispositifs collecteurs.

12. Procédé suivant la revendication 11, dans lequel la température d'admission du fluide gazeux s'élève à 180-350°C, de préférence à 200-260°C.

13. Procédé suivant la revendication 11 ou 12, dans lequel la température de l'air d'échappement s'élève à 120-130°C.

14. Procédé suivant l'une des revendications 11 à 13, dans lequel la pression d'injection s'élève à 1-50 bars, de préférence à 14-19 bars.

15. Procédé suivant l'une des revendications 11 à 14, dans lequel on utilise 0,5 à 2,5 % en poids de disaccharide dans la préparation de la suspension de pigment.

16. Procédé suivant l'une des revendications 11 à 15, dans lequel la suspension de pigment contient au moins un pigment d'oxyde de fer.

17. Procédé suivant la revendication 16, dans lequel le pigment d'oxyde de fer est un pigment d'oxyde de fer précipité.

18. Procédé suivant l'une des revendications 11 à 16, dans lequel le disaccharide est le cellobiose, le maltose, le lactose, le gentobiose, le mélibiose, le tétrahalose ou le turanose.

19. Procédé suivant la revendication 18, dans lequel le disaccharide est le lactose.

20. Procédé suivant l'une des revendications 11 à 19, dans lequel on utilise en outre un agent tensio-actif dans la préparation de la suspension.

21. Procédé suivant l'une des revendications 11 à 20, dans lequel le granulé pigmentaire présente une humidité résiduelle de 0,5 à 2,5 % en poids, de préférence de 1 à 2 % en poids.

22. Utilisation d'un granulé pigmentaire suivant l'une des revendications 1 à 10 pour la coloration de matériaux de construction.
